# EUROPÄISCHE PATENTSCHRIFT

(11) **EP 1 013 093 B1**
(45) Veröffentlichungstag und Bekanntmachung des Hinweises auf die Patenterteilung: **01.03.2006**
(21) Anmeldenummer: 98949881.1
(22) Anmeldetag: 13.08.1998
(51) Int. Cl.: H04N 7/22, H04Q 7/22

(54) **VERFAHREN ZUM UBERTRAGEN VON STATUSINFORMATIONEN IN EINEM MOBILFUNKSYSTEM**
METHOD FOR TRANSMITTING STATUS INFORMATION IN A MOBILE RADIOCOMMUNICATIONS SYSTEM
PROCEDE PERMETTANT DE TRANSMETTRE DES INFORMATIONS D'ETAT DANS UN SYSTEME DE RADIOCOMMUNICATION MOBILE

(30) Priorität: 10.09.1997 DE 19739754
(43) Veröffentlichungstag der Anmeldung: 28.06.2000
(73) Patentinhaber: SIEMENS AKTIENGESELLSCHAFT, 80333 München (DE)
(72) Erfinder: KALB, Thorsten, D-82061 Neuried (DE); SASSE, Jörg, D-80995 München (DE)
(86) Internationale Anmeldenummer: PCT/DE1998/002339
(87) Internationale Veröffentlichungsnummer: WO 1999/013645

(56) Entgegenhaltungen:
- EP-A- 0 622 928
- EP-A- 0 793 394
- US-A- 5 046 082
- US-A- 5 557 655

## Beschreibung

Die vorliegende Erfindung betrifft ein Verfahren zum Übertragen von Statusinformationen, die den Zustand von in einem Mobilfunksystem bereitgestellten Zusatzdiensten bezeichnen, nach dem Oberbegriff des Anspruches 1.

Die in einem Mobilfunksystem bereitgestellten Dienstleistungen umfassen verschiedene Arten von Diensten. Bei dem sogen. GSM-Mobilfunksystem (Global System for Mobile Communications) wird im wesentlichen zwischen vier Hauptarten von Diensten, nämlich den sogen. Bearer Services, Teleservices, Supplementary Services und Value Added Services, unterschieden.

Die Bearer Services bezeichnen die Trägerdienste, d.h. sie stellen die reinen Transportdienste zur Datenübertragung dar. Die Teleservices sind zwischen den Teilnehmer-Endgeräten des Mobilfunksystems unter Einfluß der Benutzerschnittstelle definiert und basieren auf den Bearer Services.

Daneben werden auf der Netzseite des Mobilfunksystems zusätzlich eine Fülle von Supplementary Services, d.h. Zusatzdiensten, angeboten, die auf den zuvor beschriebenen Bearer- und Teleservices aufsetzen. Diese Zusatzdienste umfassen beispielsweise die Rufumleitung, die Anrufanzeige, die Rufsperre, das Sperren bestimmter Verbindungen, Konferenzschaltung, das Hin- und Herschalten zwischen zwei Verbindungen usw.

Ergänzend sei darauf hingewiesen, daß die Value Added Services weitere Dienste, wie z.B. eine Hotline, Verkehrsinformationsmitteilung usw., umfassen können.

Die vorliegende Erfindung betrifft nun insbesondere die zuvor beschriebenen Zusatzdienste (Supplementary Services). Sind derartige Zusatzdienste in einem Mobilfunksystem auf der Netzseite realisiert, müssen die Zustände der entsprechenden Zusatzdienste von dem Benutzer eines mobilen Endgerätes des Mobilfunksystems, z.B. eines Mobiltelefons, abfragbar sein. Dabei sind bekannterweise die aktuellen Zustände der einzelnen Zusatzdienste auf der Netzseite gespeichert, wobei beim GSM-Mobilfunksystem die Zustände in der dem Benutzer zugewiesenen Heimatdatei (Home Location Register, HLR), d.h. in einer Datenbank des Festnetzes, gespeichert sind.

Bisher ist bekannt, die die Zustände der einzelnen Zusatzdienste bezeichneten Statusinformationen ausschließlich auf Anforderung durch den Benutzer über die Luftschnittstelle abzufragen und in dem Mobiltelefon des Benutzers entweder temporär, d.h. flüchtig, oder nicht-flüchtig zu speichern.

Diese vorgehensweise hat jedoch eine Vielzahl von Problemen zur Folge. Wurden die abgefragten Statusinformationen in dem Mobiltelefon lediglich temporär gespeichert, gehen die Informationen nach dem Aus- und Einschalten des Mobiltelefons verloren. Bei der nicht-flüchtigen Speicherung der Statusinfortnationen (z.B. in einem EEPROM) kann es zu Inkonsistenzen kommen, wenn die bei der Anmeldung eines Mobiltelefons zu übertragenden Teilnehmerdaten (Authentikationsdaten) auf einer Chip-Karte gespeichert sind (bei dem GSM-Mobilfunksystem auf der sogen. SIM-Karte), die in einem beliebigen Mobiltelefon verwendet werden kann (SIM-Roaming), da die Statusinformationen der Zusatzdienste im Mobiltelefon, d.h. dem Gerät, selbst gespeichert werden, so daß ein Teilnehmer mit seiner SIM-Karte in einem anderen Mobiltelefon Zusatzdienste ändern kann. Des weiteren kann der Fall auftreten, daß die Statusinformationen vom Netzbetreiber in der HLR-Datei geändert worden sind, ohne daß der Benutzer zwischenzeitlich die Statusinformationen erneut abgefragt hat, so daß in dem Mobiltelefon des Benutzers ggfs. falsche Statusinformationen gespeichert und dem Benutzer mitgeteilt werden.

Die EP-A-0 793 394 offenbart ein Verfahren zur Administrierung zusätzlicher Dienste in einem Mobilfunksystem mit mobilen Teilnehmern, Vermittlungseinrichtungen zur Herstellung einer Verbindung zu einem mobilen Teilnehmer, Dienstesteuerungseinheiten zur Realisierung von zusätzlichen Diensten und Speichereinheiten für Statusinformationen über die zusätzlichen Dienste. Bei einem von einem mobilen Teilnehmer aufgelösten Verbindungsaufbau wird der Status von zusätzlichen Diensten netzseitig abgefragt. In der Vermittlungseinrichtung wird nämlich die Abfrage von zusätzlichen Informationen über die Zuordnung von zusätzlichen Diensten zu Dienstesteuerungseinheiten und über den Status des jeweiligen zusätzlichen Dienstes veranlaßt bzw. die Speichereinheiten werden abgefragt.

Bei der EP-A-0 622 928 wird ein Verfahren zur Signalisierung in einem Mobilfunksystem offenbart, bei dem Informationen über Zusatzdienste zwischen der Netzseite des Mobilfunksystems und einem mobilen Teilnehmer übertragen werden. Nach diesem Verfahren können besonders rufbezogene Nachrichten, die Daten für Zusatzdienste enthalten können, und alle nicht-rufbezogene Nachrichten für Zusatzdienste zwischen einem mobilen Teilnehmer und einer netzseitigen Vermittlungseinrichtung übertragen werden.

Der vorliegenden Erfindung liegt daher die Aufgabe zugrunde, ein verbessertes Verfahren zum Übertragen von Statusinformationen, die den Zustand mindestens eines in einem Mobilfunksystem bereitgestellten Zusatzdienstes bezeichnen, zu schaffen, das Inkonsistenzen zwischen den tatsächlichen, netzseitig gespeicherten Statusinformationen und den in einem mobilen Endgerät des Mobilfunksystems verfügbaren Statusinformationen vermeidet und eine ständige Aktualisierung der in dem mobilen Endgerät verfügbaren Statusinformationen sicherstellt.

Diese Aufgabe wird gemäß der Erfindung durch ein Verfahren nach Anspruch 1 gelöst.

Die Unteransprüche beschreiben vorteilhafte und bevorzugte Ausgestaltungen der vorliegenden Erfindung.

Nach Anspruch 16 wird das erfindungsgemäße Verfahren insbesondere in einem GSM-Mobilfunksystem angewendet.

Gemäß der vorliegenden Erfindung werden die Statusinformationen, die den Zustand der in einem Mobilfunksystem bereitgestellten Zusatzdienste (Supplementary Services) bezeichnen, unabhängig von dem Benutzer eines mobilen Endgeräts des Mobilfunksystems automatisch von der Netzseite des Mobilfunksystems zu dem entsprechenden mobilen Endgerät übertragen. Das heißt, die Statusinformationen werden ohne explizite Anforderung durch den Benutzer des mobilen Endgeräts von dem Netz, d.h. bei dem GSM-Mobilfunksystem von der HLR-Datei, an das mobile Endgerät gesendet, so daß die dem Benutzer zur Verfügung stehenden Statusinformationen stets dem aktuellen Zustand entsprechen, d.h. es ist stets eine optimale Informations- oder Datenintegrität gewährleistet. Idealerweise erfolgt die Übertragung der Statusinformationen automatisch nach dem Einschalten des mobilen Endgeräts, z.B. während der normalen Anmeldeprozedur des mobilen Endgeräts beim Netz. Allgemein kann die Übertragung der Statusinformationen innerhalb einer bereits definierten Signalisierungs- bzw. Anforderungsprozedur durchgeführt werden (z.B. beim GSM-Mobilfunksystem während der sogen. IMSI Attach bzw. Location Updating Request). Alternativ kann die Übertragung der Statusinformationen von dem mobilen Endgerät jedoch auch mit einer eigens hierfür vorgesehenen Signalisierungs- bzw. Anforderungsprozedur ausgeführt werden.

Des weiteren ist die Möglichkeit vorgesehen, die Abfrage von Statusinformationen zu verbieten, d.h. zu sperren, um beispielsweise die Netzlast zu minimieren. Die Sperrung der Statusinformationen kann insbesondere netzseitig realisiert sein. Nach Anforderung der Übertragung der Statusinformationen von dem mobilen Endgerät werden in diesem Fall lediglich diejenigen Statusinformationen übertragen, die nicht zuvor gesperrt worden sind.

Allgemein können die Statusinformationen mit dem bei dem verwendeten Mobilfunksystem üblichen Format (z.B. beim GSM-Mobilfunksystem mit dem ASN.1-Format) übertragen werden. Um eine unnötige Netzbelastung zu vermeiden, werden die Statusinformationen jedoch in kompakter Form kodiert übertragen, wobei auch eine Übermittlung der Statusinformationen in periodischer Form möglich ist. Bei dieser kompakten Kodierung sind die Statusinformationen in Informationselemente zusammengefaßt, die zu einer Mitteilung (Message) verkettet sein können. Jedes Informationselement kann Identifizierungsinformationen zur Bezeichnung des Informationselements und/oder des Formats des Informationselements aufweisen. Als besonders vorteilhaft hat sich ein Übertragungsformat erwiesen, bei dem die Statusinformationen innerhalb eines Informationselements in teleserviceabhängige Statusinformationen und teleserviceunabhängige Statusinformationen aufgeteilt sind.

Die mit dem erfindungsgemäßen verfahren übertragenen Statusinformationen können eine Vielzahl von unterschiedlichen Zuständen des jeweiligen Zusatzdienstes bezeichnen, wobei insbesondere mehr als zwei unterschiedliche Zustände bezeichnet werden können.

Wurde die Abfrage von Statusinformationen hinsichtlich bestimmter Zusatzdienste gesperrt, können die von dem Netz zu dem mobilen Endgerät (Mobiltelefon) übertragenen Informationen Sperrinformationen zu den gesperrten Zusatzdiensten aufweisen, die dem Benutzer von der Sperrung des Zugriffs auf die entsprechenden Statusinformationen unterrichten.

Die Erfindung wird nachfolgend anhand bevorzugter Ausführungsbeispiele unter Bezugnahme auf die Zeichnung näher beschrieben.
- Fig. 1: zeigt ein erstes Ausführungsbeispiel des erfindungsgemäßen Verfahrens,
- Fig. 2: zeigt ein zweites Ausführungsbeispiel des erfindungsgemäßen Verfahrens,
- Fig. 3: zeigt ein drittes Ausführungsbeispiel des erfindungsgemäßen Verfahrens,
- Fig. 4: zeigt ein bekanntes Format zur Übermittlung von Statusinformationen, welches bei dem erfindungsgemäßen Verfahren angewendet werden kann, und
- Fig. 5a-5c: zeigen Darstellungen zur Erläuterung eines bevorzugten Formats, welches bei dem erfindungsgemäßen Verfahren angewendet werden kann.

Gemäß der vorliegenden Erfindung werden die Statusinfortnacionen über den Zustand der in dem Mobilfunksystem bereitgestellten Zusatzdienste (Supplementary Services) ohne Eingriff des Benutzers, d.h. ohne explizite Benutzeranfrage, automatisch von dem Netz zu dem mobilen Endgerät (Mobiltelefon) übertragen. Bevorzugt erfolgt die Übertragung der Statusinformationen unmittelbar nach Einschalten des mobilen Endgeräts.

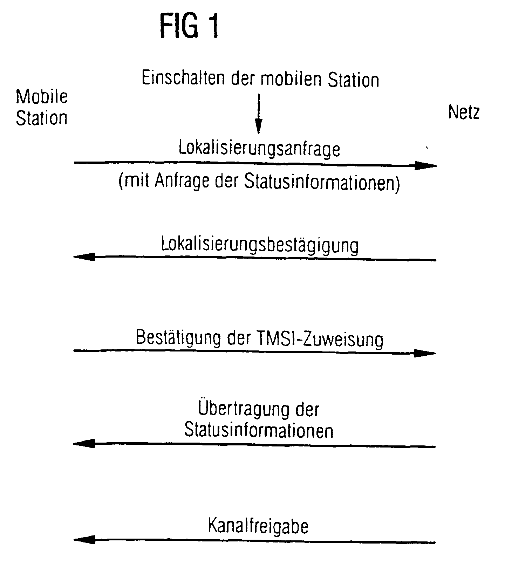

Fig. 1 zeigt ein erstes Ausführungsbeispiel des erfindungsgemäßen Verfahrens. Bei dem in Fig. 1 dargestellten Ausführungsbeispiel werden die Statusinformationen innerhalb einer bereits bestehenden Signalisierungsprozedur des Mobilfunksystems übertragen.

Wie in Fig. 1 gezeigt ist, erfolgt nach dem Einschalten der mobilen Station zunächst eine Lokalisierungsanfrage (Location Updating Request) von der mobilen Station an das Netz, wobei zugleich eine Anfrage zur Übermittlung der Statusinformationen über den Zustand der bereitgestellten Zusatzdienste übertragen wird. Nachdem das Mobilfunknetz den Teilnehmer, d.h. die mobile Station, lokalisieren konnte, erfolgt die Lokalisierungsbestätigung (Location Updating Accept) von dem Netz zu der mobilen Station. Gleichzeitig werden der mobilen Station zur Identifizierung des Teilnehmers Identifizierungsdaten (International Mobile Subscriber Identity, IMSI oder Temporary Mobile Subscriber Identity, TMSI) zugewiesen. Anschließend erfolgt eine entsprechende Bestätigung der IMSI- bzw. TMSI-Zuweisung durch die mobile Station. Zusätzlich zu der normalen Signalisierungsprozedur werden nunmehr von dem Mobilfunknetz die angeforderten Statusinformationen über den Zustand der bereitgestellten Zusatzdienste an die mobile Station übertragen. Wie bei der gewöhnlichen Signalisierungsprozedur, d.h. der normalen Anmeldung der mobilen Station bei dem Mobilfunknetz, erfolgt schließlich die Kanalfreigabe (Channel Release) durch das Mobilfunknetz.

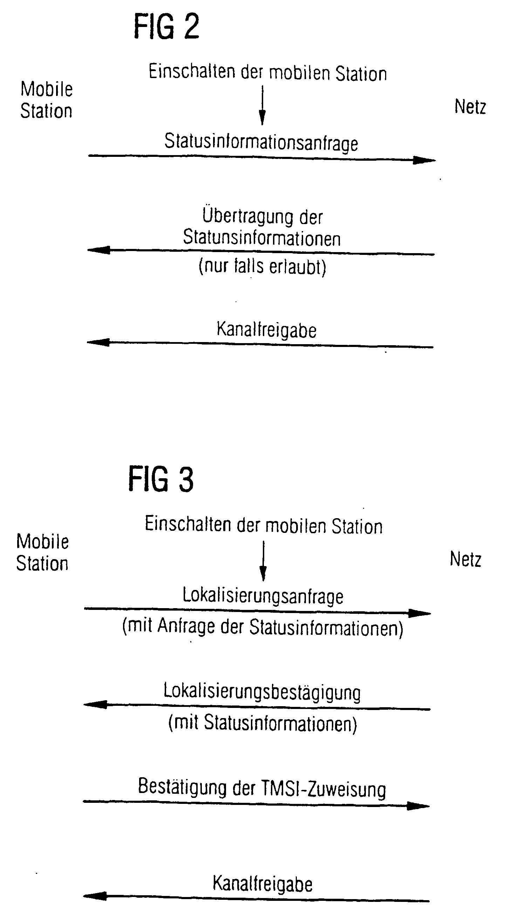

Alternativ zu dem in Fig. 1 dargestellten Ausführungsbeispiel kann die Übertragung der Statusinformationen auch innerhalb einer eigens hierfür vorgesehenen Signalisierungs- bzw. Anforderungsprozedur ausgeführt werden. Zu diesem Zweck kann - wie in Fig. 2 gezeigt ist - nach dem Einschalten der mobilen Station automatisch eine Statusinformationsanfrage von der mobilen Station zu der Netzseite übertragen werden. Anschließend erfolgt die Übertragung der Statusinformationen von der Netzseite zu der mobilen Station und - analog zu Fig. 1 - die Kanalfreigabe durch das Mobilfunknetz.

Gegebenenfalls kann auf der Netzseite die Statusabfrage durch die mobile Station gesperrt sein, um beispielsweise die Netzbelastung zu minimieren. Dementsprechend ist in Fig. 2 eine Übertragung der Statusinformationen von dem Mobilfunknetz zu der mobilen Station nur vorgesehen, falls keine entsprechende Sperre vorliegt. Selbstverständlich können die Statusinformationen auch zusatzdienstspezifisch gesperrt werden, so daß nur der Zugriff auf Statusinformationen bezüglich bestimmter Zusatzdienste gesperrt und unterbunden wird. Alternativ kann auch vorgesehen sein, daß die mobile Station nur dann eine Statusabfrage an das Netz senden kann, wenn dies netzseitig überhaupt zugelassen ist. Auf diese weise kann die Belastung des Mobilfunknetzes durch vorzeitiges Unterbinden der Statusabfrage verringert werden.

Fig. 3 zeigt ein drittes Ausführungsbeispiel des erfindungsgemäßen Verfahrens, welches eine Abwandlung des in Fig. 1 dargestellten ersten Ausführungsbeispiels darstellt. Gemäß dem dritten Ausführungsbeispiel erfolgt wiederum die Übermittlung der Statusinformationen innerhalb einer bereits bestehenden Signalisierungs- bzw. Anforderungsprozedur, wobei jedoch im Gegensatz zu dem ersten Ausführungsbeispiel die Statusinformationen in einer zu dieser Signalisierungsprozedur gehörenden Nachricht (Message) übertragen werden. So erfolgt gemäß Fig. 3 die Übertragung der Statusinformationen von dem Mobilfunknetz zu der mobilen Station zusammen mit der Lokalisierungsbestätigung (Location Updating Accept). Ansonsten stimmt das in Fig. 3 dargestellte Ausführungsbeispiel mit dem in Fig. 1 dargestellten Ausführungsbeispiel überein.

Das erfindungsgemäße Verfahren wurde zuvor beispielhaft unter Bezugnahme auf Fig. 1 - 3 anhand eines GSM-Mobilfunksystems erläutert. Selbstverständlich kann das erfindungsgemäße Verfahren auch auf andere Mobilfunksysteme angewendet werden.

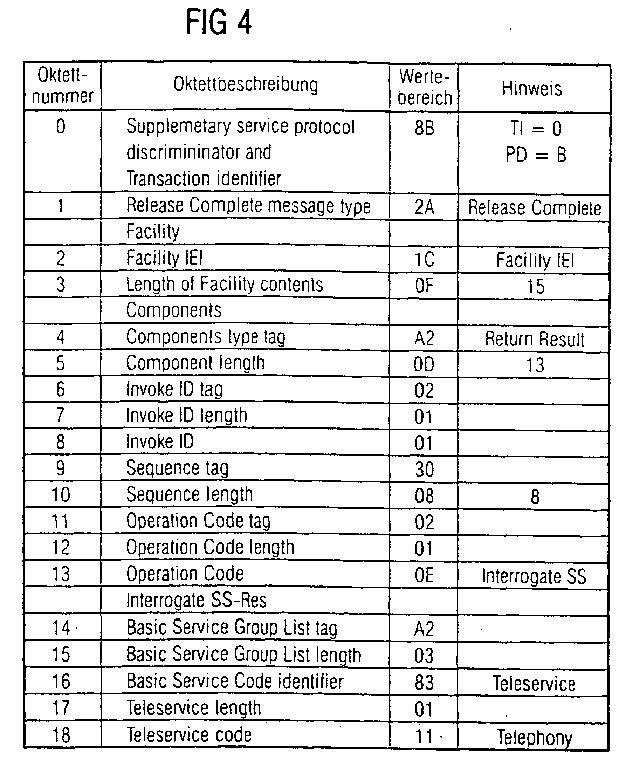

Die Statusinformationen über den Zustand der bereitgestellten Zusatzdienste können im bereits verfügbaren Format des jeweiligen Mobilfunksystems übertragen werden. So werden beispielsweise beim GSM-Mobilfunksystem die Statusinformationen bisher mit dem sogen. ASN.1-Format (Abstract Syntax Notation) übertragen. Dabei handelt es sich um ein bestimmtes standardisiertes Oktettformat für die Übertragung von Informationen, was nachfolgend unter Bezugnahme auf Fig. 4 näher erläutert werden soll.

Fig. 4 zeigt beispielshaft die Antwort des Mobilfunknetzes auf eine Abfrage der Statusinformation des Zusatzdienstes "Sperre ankommender Anrufe" (*#35#) gemäß dem GSM-Mobilfunkstandard. Die Antwort des Mobilfunknetzes umfaßt insgesamt 19 Bit-oktetts, wobei in Fig. 4 in der zweiten Spalte der Inhalt des jeweiligen Oktetts, in der dritten Spalte der jeweilige hexadezimale Wertebereich des Oktetts und in der vierten Spalte ein näherer Hinweis zu dem jeweiligen Oktett angegeben ist. So bezeichnet beispielsweise der Hinweis in der vierten Spalte zu dem Oktett Nr. 10 die Tatsache, daß insgesamt zwischen acht unterschiedlichen Sequenzlängen unterschieden werden kann. Auf den näheren Inhalt des in Fig. 4 dargestellten Formats soll an dieser Stelle nicht näher eingegangen werden, da er zum einen für den Gegenstand der vorliegenden Erfindung unerheblich und zum anderen für den auf dem Gebiet der ASN-Kodierung tätigen Fachmann ohne weiteres aus Fig. 4 verständlich ist.

Wichtig in diesem Zusammenhang ist lediglich, daß bei dem in Fig. 4 dargestellten ASN.1-Format die eigentliche Statusinformation über den Zustand des entsprechenden Zusatzdienstes in einem einzigen Byte, nämlich dem Oktett 18 ("Teleservice code", "Telephony"), enthalten ist. Bei dem in Fig. 4 dargestellten Beispiel ist die ASN.1-kodierte Antwort so zu interpretieren, daß augenblicklich die Sperre für ankommende Anrufe für den Telefondienst aktiviert ist.

Aus der vorhergehenden Beschreibung zu Fig. 4 folgt, daß sich bei Übertragung der Statusinformationen mit dem ASN.1-Format die mobile Station stets die Information, welcher Zusatzdienst für welchen Tele- oder Bearer Services abgefragt wurde, merken muß, um die empfangene Antwort des Mobilfunknetzes richtig interpretieren zu können. Aufgrund der ASN.1-Kodierung ist bei dem in Fig. 4 dargestellten Beispiel eine hohe Redundanz vorhanden.

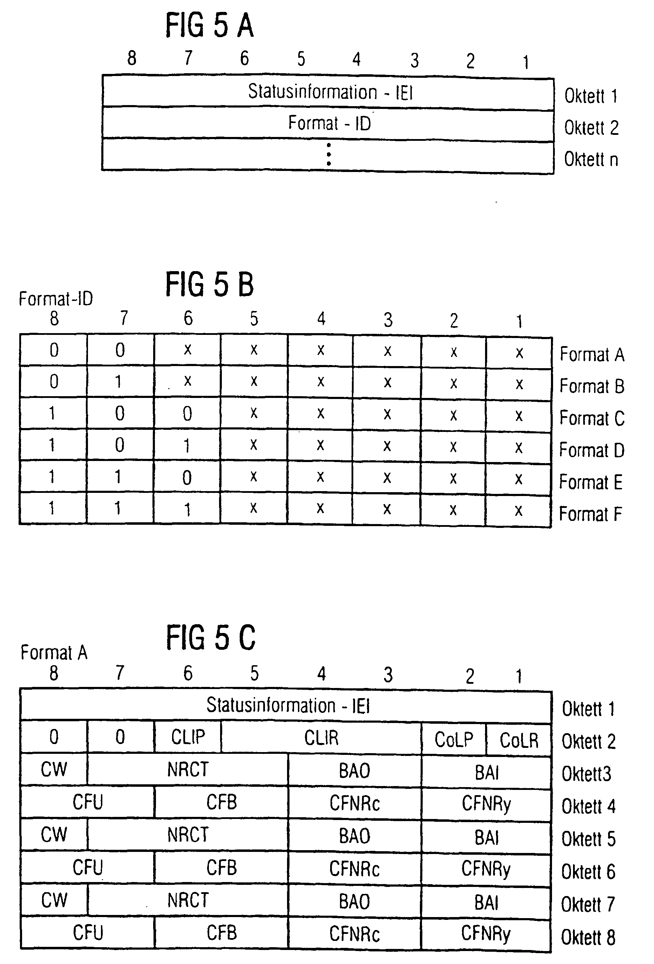

Es wird daher im Rahmen der vorliegenden Erfindung ein verbessertes Format für die Übertragung der Statusinformationen vorgeschlagen, wobei es sich bei diesem Format um eine besonders kompakte Kodierung der Statusinformationen handelt. Dies sei nachfolgend näher unter Bezugnahme auf Fig. 5a bis 5c erläutert werden.

Das neue, kompakte Übertragungsformat sieht vor, daß die Statusinformationen in Informationselemente zusammengefaßt werden, die zu einer Mitteilung (Message) verkettet sein können. Jedes Informationselement besitzt vorteilhafterweise den in Fig. 5a dargestellten Aufbau. Demnach ist das Informationselement aus einer bestimmten Anzahl n von Bit-Oktetts zusammengesetzt, wobei das erste Oktett einen Statusinformation-IEI (Information Element Identifier) beinhaltet, der das jeweilige Informationselement identifiziert. Das zweite Oktett enthält einen Format-ID (Format Identifier), der das jeweils verwendete Format des Informationselements festlegt. Die nachfolgenden Oktetts des in Fig. 5a dargestellten Informationselements beinhalten die gewünschten Statusinformationen zu den bereitgestellten Zusatzdiensten.

Fig. 5b zeigt verschiedene Möglichkeiten für den in Fig. 5a dargestellten Format-ID, wobei insbesondere zwischen sechs verschiedenen Formaten A - F unterschieden wird. Die Formate A - F sind abhängig von den Bitwerten der zwei bzw. drei höherwertigsten Bits des in Fig. 5a dargestellten zweiten Oktetts eindeutig identifiziert. Nehmen beispielsweise das siebte und achte Bit des zweiten Oktetts des in Fig. 5a dargestellten Informationselements jeweils den binären Wert "0" an, ist dadurch das Format A spezifiziert.

Fig. 5c zeigt beispielhaft den Aufbau eines Informationselements gemäß Fig. 5a, falls die Statusinformationen mit dem in Fig. 5b gezeigten Format A übertragen werden. In diesem Fall enthält das Oktett 1 wiederum Identifizierungsinformationen zu dem jeweiligen Informationselement (Statusinformation - IEI). Das Oktett 2 enthält in den Bits 7 und 8 jeweils den für die Spezifizierung des Formats A erforderlichen binären Wert "0".

Des weiteren enthält das Oktett 2 Statusinformationen für vier Teleservices unabhängige Zusatzdienste CLIP, CLIR, CoLP und CoLR. Mit Hilfe des Zusatzdienstes CLIP (Calling Line Identification Presentation) wird die Anzeige der Rufnummer ermöglicht. Der Zusatzdienst CLIR (Calling Line Identification Restriction) ermöglicht hingegen die Nichtanzeige der eigenen Rufnummer der mobilen Station. Der Zusatzdienst CoLP (Connected Line Presentation) ermöglicht die Anzeige der Verbindungsnummer, was insbesondere dann sinnvoll ist, wenn bei einem Anruf aufgrund einer eingeschalteten Rufnummerumleitung auf ein anderes Zielgerät umgeschaltet worden ist. Mit dem entsprechenden Zusatzdienst CoLR (Connected Line Restriction) kann - analog zu dem Zusatzdienst CLIR- die Anzeige der eigenen Verbindungsnummer der mobilen Station unterbunden werden. Für die Statusinformationen der Zusatzdienste CLIP, CoLP und CoLR ist jeweils lediglich ein Bit des Oktetts 2 vorgesehen, so daß hinsichtlich dieser Zustandsinformationen lediglich zwischen zwei unterschiedlichen Zuständen ("eingerichtet"/"nicht eingerichtet") unterschieden werden kann. Für den CLIR-Zusatzdienst sind hingegen drei Bits des Oktetts 2 vorgesehen, so daß theoretisch zwischen insgesamt 8 unterschiedlichen Zuständen hinsichtlich dieses Zusatzdienstes unterschieden werden kann. So kann hinsichtlich dieses Zusatzdienstes beispielsweise zwischen den Zuständen "eingerichtet", "nicht eingerichtet", "temporär mit dem Defaultwert '*unterdrückt*' eingerichtet" oder "temporär mit dem Defaultwert '*erlaubt*' eingerichtet" unterschieden werden.

Wie bereits zuvor beschrieben worden ist, handelt es sich bei den Zusatzdiensten CLIP, CLIR, CoLP und CoLR um teleserviceunabhängige Zusatzdienste. Daneben kann das in Fig. 5c gezeigte Informationselement jedoch auch Statusinformationen für teleserviceabhängige Zusatzdienste beinhalten. Bei dem in Fig. 5c dargestellten Beispiel werden Statusinformationen für die teleserviceabhängigen Zusatzdienste CFU, CFB, CFNRC, CFNRy, CW, NRCT, BAO und BAI übermittelt. Die Statusinformationen zu diesen teleserviceabhängigen Zusatzdiensten sind hinsichtlich der verschiedenen Teleservices jeweils in zwei Oktetts zusammengefaßt. So beschreiben die Oktetts 3 und 4 die Statusinfornlationen für die entsprechenden Zusatzdienste für den Teleservice "Sprachübermittlung", die Oktetts 5 und 6 bezeichnen die entsprechenden Statusinformationen für den Teleservice "Faxübertragung" und die Oktetts 7 und 8 bezeichnen die Statusinformationen für den Teleservice "PAD-Übertragung" (d.h. für die paketvermittelte Datenübertragung).

Bei dem in Fig. 5c dargestellten Beispiel sind für die Zusatzdienste CFU, CFB, CFNRc, CFNRy jeweils zwei Bits vorgesehen, so daß zwischen vier unterschiedlichen Zuständen (z.B. "nicht registriert", "nicht aktiv", "aktiv und in Betrieb" oder "aktiv und ruhend") unterschieden werden kann. Mit Hilfe des Zusatzdienstes CFU (Call Forwarding Unconditioned) ist eine unbedingte Rufumleitung möglich. Der Zusatzdienst CFB (Call Forwarding Busy) ermöglicht eine Rufumleitung, falls die angerufene mobile Station augenblicklich besetzt ist. Die Zusatzdienste CFNRc (Call Forwarding Not Reachable) bzw. CFNRy (Call Forwarding On No Reply) ermöglichen eine Rufumleitung, falls der angerufene Teilnehmer (z.B. aufgrund eines Funkloches) nicht erreichbar ist bzw. keine Antwort von dem angerufenen Teilnehmer vorliegt.

Für den Zusatzdienst CW sind zwei Bits des Oktetts 3, 5 bzw. 7 vorgesehen. Der Zusatzdienst CW (Call Waiting) ermöglicht das "Anklopfen" eines anrufenden Mobilfunkteilnehmers, falls das angerufene Endgerät augenblicklich besetzt ist.

Für den Zusatzdienst NRCT sind insgesamt 3 Bits vorgesehen, wobei mit dem Zusatzdienst NRCT (No Reply Condition Time) im Zusammenhang mit dem Zusatzdienst CFNRy die Zeit festgelegt werden kann, nach der die Rufumleitung des Zusatzdienstes CFNRy erfolgt. Insbesondere kann die Zeit beispielsweise in 5 Sekundenschritten eingestellt werden.

Für die Zusatzdienste BAO und BAI sind jeweils 3 Bits der entsprechenden Oktetts vorgesehen. Theoretisch kann somit zwischen acht unterschiedlichen Zuständen unterschieden werden. Der Zusatzdienst BAO (Barring of All Outgoing Calls) ermöglicht das Unterbinden abgehender Anrufe von dem entsprechenden Mobiltelefon, so daß beispielsweise zwischen den Zuständen "nicht aktiv", "aktiv für sämtliche abgehende Anrufe", "aktiv für sämtliche abgehende internationale Anrufe" oder "aktiv für sämtliche abgehende internationale Anrufe mit Ausnahme von Anrufen in das Heimatland" unterschieden werden kann. Der Zusatzdienst BAI (Barring of All Incoming Calls) ermöglicht das Unterbinden von sämtlichen eintreffenden Anrufen, so daß beispielsweise hinsichtlich dieses Zusatzdienstes zwischen den Zuständen "nicht aktiv", "aktiv für sämtliche eintreffende Anrufe" oder "aktiv für sämtliche eintreffende Anrufe im Falle von Roaming" unterschieden werden kann.

Analog zu dem in Fig. 5c dargestellten Format A können die in Fig. 5b gezeigten Formate B-F bestimmte Anordnungen von Statusinformationen zu bestimmten Zusatzdiensten enthalten, ohne daß an dieser Stelle näher darauf eingegangen werden soll. Allgemein kann jedes in Fig. 5a gezeigte Informationselement Statusinformationen zu bestimmten teleserviceabhängigen Zusatzdiensten und/oder teleserviceunabhängigen Zusatzdiensten enthalten. Die Statusinformationen der teleserviceabhängigen Zusatzdienste können Statusinformationen für verschiedene Tele- und Bearerservices enthalten. Selbstverständlich kann das in Fig. 5c gezeigte Format auch dahingehend abgewandelt werden, daß die für die Bezeichnung der entsprechenden Statusinfortnationen vorgesehene Bitanzahl für die einzelnen Zusatzdienste variiert wird, so daß beispielsweise für den Zusatzdienst CW mehr als 1 Bit vorgesehen ist.

Wie bereits zuvor beschrieben worden ist, kann die Übermittlung der Statusinformationen selektiv für bestimmte Zusatzdienste (und/oder für bestimmte Mobilfunkteilnehmer) gesperrt werden. In diesem Fall können mit dem beispielhaft in Fig. 5c gezeigten Format lediglich die Statusinformationen für die nicht gesperrten Zusatzdienste übertragen werden. Für die gesperrten Zusatzdienste kann das in Fig. 5c dargestellte Format z.B. anstelle der Statusinformationen Sperrinformationen zu dem mobilen Endgerät übertragen, die dem Benutzer von der Sperrung des Zugriffs auf die entsprechenden Statusinformationen informieren. Ist beispielsweise der Zugriff auf die Statusinformationen des Zugriffsdienstes CFB des in Fig. 5c dargestellten Formats A gesperrt, können mit Hilfe der beiden Bits, die für die Statusinformationen dieses Zusatzdienstes vorgesehen sind, anstelle der entsprechenden Statusinformationen Sperrinformationen übertragen werden, die beispielsweise den Empfänger über die Tatsache und/oder den Grund der Zugriffssperre bezüglich der entsprechenden Statusinformationen unterrichten.

Wie bei dem bekannten Verfahren werden auch bei dem erfindungsgemäßen Verfahren nach dem Empfang der von der Netzseite übermittelten Statusinformationen diese in dem mobilen Endgerät, d.h. beispielsweise in dem Mobiltelefon, gespeichert, wobei die Statusinformationen vorzugsweise mit jedem Einschalten des mobilen Endgeräts erneut von dem mobilen Endgerät abgefragt und aktualisiert werden.

## Patentansprüche

1. Verfahren zum Übertragen von Statusinformationen, die den Zustand mindestens eines in einem Mobilfunksystem bereitgestellten Zusatzdienstes bezeichnen,
wobei die Statusinformationen von der Netzseite zu einem mobilen Endgerät übertragen werden,
**dadurch gekennzeichnet,**
**daß** die Statusinformationen unabhängig von einem Benutzer des mobilen Endgerätes automatisch nach dem Einschalten des mobilen Endgerätes übertragen werden.

2. Verfahren nach Anspruch 1,
**dadurch gekennzeichnet,**
**daß** die Statusinformationen während der Anmeldeprozedur des mobilen Endgerätes automatisch übertragen werden.

3. Verfahren nach einem der vorhergehenden Ansprüche,
**dadurch gekennzeichnet,**
**daß** die Statusinformationen übertragen werden, nachdem sie automatisch von dem mobilen Endgerät angefordert worden sind.

4. Verfahren nach Anspruch 3,
**dadurch gekennzeichnet,**
**daß** die Statusinformationen von dem mobilen Endgerät innerhalb einer in dem Mobilfunksystem bereits festgelegten Anforderungsprozedur angefordert werden.

5. Verfahren nach Anspruch 3,
**dadurch gekennzeichnet,**
**daß** die Statusinformationen von dem mobilen Endgerät innerhalb einer eigens hierfür vorgesehenen Anforderungsprozedur angefordert werden.

6. Verfahren nach einem der vorhergehenden Ansprüche,
**dadurch gekennzeichnet,**
**daß** die Übertragung bestimmter Statusinformationen gesperrt werden kann und lediglich die nicht gesperrten Statusinformationen übertragen werden.

7. Verfahren nach Anspruch 6,
**dadurch gekennzeichnet,**
**daß** die Sperrung der bestimmten Statusinformationen netzseitig erfolgt.

8. Verfahren nach einem der vorhergehenden Ansprüche,
**dadurch gekennzeichnet,**
**daß** die Statusinformationen in Informationselementen zusammengefaßt übertragen werden.

9. Verfahren nach Anspruch 8,
**dadurch gekennzeichnet,**
**daß** jedes Informationselement Identifizierungsinformationen zur Bezeichnung des Informationselementes und/oder des Formats des Informationselementes aufweist.

10. Verfahren nach Anspruch 8 oder 9,
**dadurch gekennzeichnet,**
**daß** jedes Informationselement Statusinformationen umfaßt, die in teleserviceabhängige Statusinformationen und teleserviceunabhängige Statusinformationen unterteilt sind.

11. Verfahren nach einem der Ansprüche 8 bis 10,
**dadurch gekennzeichnet,**
**daß** jedes Informationselement acht Bit-Oktetts umfaßt.

12. Verfahren nach einem der Ansprüche 8 bis 11,
**dadurch gekennzeichnet,**
**daß** die Statusinformationen abhängig von dem jeweiligen Zusatzdienst eine Vielzahl von unterschiedlichen Zuständen, insbesondere mindestens drei unterschiedliche Zustände, des jeweiligen Zusatzdienstes bezeichnen.

13. Verfahren nach Anspruch 6 oder 7,
**dadurch gekennzeichnet,**
**daß** für den Fall, daß bestimmte Statusinformationen gesperrt worden sind, entsprechende Sperrinformationen von der Netzseite zu dem mobilen Endgerät übertragen werden.

14. Verfahren nach Anspruch 13 und einem der Ansprüche 8 bis 12,
**dadurch gekennzeichnet,**
**daß** für den Fall, daß die Übertragung von bestimmte Zusatzdienste betreffenden Statusinformationen gesperrt worden ist, die von der Netzseite zu dem mobilen Endgerät übertragenen Informationen Statusinformationen für die nicht gesperrten Zusatzdienste in Kombination mit Sperrinformationen für die gesperrten Zusatzdienste umfassen

15. Anwendung eines Verfahrens nach einem der vorhergehenden Ansprüche in einem GSM-Mobilfunksystem.

## Revendications

1. Procédé pour transmettre des informations d'état qui désignent l'état d'au moins un service supplémentaire mis à disposition dans un système de radiocommunication mobile, lesdites informations d'état étant transmises du côté réseau vers un terminal mobile,
**caractérisé en ce que**
les informations d'état sont transmises, indépendamment d'un utilisateur du terminal mobile, automatiquement après la mise en marche du terminal mobile.

2. Procédé selon la revendication 1,
**caractérisé en ce que**
les informations d'état sont transmises automatiquement peridant la procédure de login du terminal mobile.

3. Procédé selon l'une des revendications précédentes,
**caractérisé en ce que**
les informations d'état sont transmises après qu'elles aient été demandées automatiquement par le terminal mobile.

4. Procédé selon la revendication 3,
**caractérisé en ce que** les informations d'état sont demandées par le terminal mobile dans le cadre d'une procédure de demande déjà fixée dans le système de radiocommunication mobile.

5. Procédé selon la revendication 3,
**caractérisé en ce que**
les informations d'état sont demandées par le terminal mobile dans le cadre d'une procédure de demande spécialement prévue à cet effet.

6. Procédé selon l'une des revendications précédentes,
**caractérisé en ce que**
la transmission de certaines informations d'état peut être bloquée et seules les informations d'état non bloquées sont transmises.

7. Procédé selon la revendication 6,
**caractérisé en ce que**
le blocage desdites certaines informations d'état se fait du côté réseau.

8. Procédé selon l'une des revendications précédentes,
**caractérisé en ce que**
les informations d'état sont transmises regroupées dans des éléments d'information.

9. Procédé selon la revendication 8,
**caractérisé en ce que**
chaque élément d'information comporte des informations d'identification destinées à désigner l'élément d'information et/ou le format de l'élément d'information.

10. Procédé selon la revendication 8 ou 9,
**caractérisé en ce que**
chaque élément d'information comprend des informations d'état divisées en informations d'état dépendantes du téléservice et informations d'état indépendantes du téléservice.

11. Procédé selon l'une des revendications 8 à 10,
**caractérisé en ce que**
chaque élément d'information comprend huit octets.

12. Procédé selon l'une des revendications 8 à 11,
**caractérisé en ce que**
les informations d'état désignent en fonction du service supplémentaire respectif une pluralité d'états différents, en particulier au moins trois états différents du service supplémentaire respectif.

13. Procédé selon la revendication 6 ou 7,
**caractérisé en ce que**
dans le cas où certaines informations d'état ont été bloquées, des informations correspondantes relatives au blocage sont transmises du côté réseau vers le terminal mobile.

14. Procédé selon la revendication 13 et l'une des revendications 8 à 12,
**caractérisé en ce que**
dans le cas où la transmission d'informations d'état concernant certains services supplémentaires a été bloquée, les informations transmises du côté réseau vers le terminal mobile comprennent des informations d'état pour les services supplémentaires non bloqués en combinaison avec des informations relatives au blocage pour les services supplémentaires bloqués.

15. Application d'un procédé selon l'une des revendications précédentes dans un système de radiocommunication mobile GSM.

## Claims

1. Method for transmitting status information indicating the status of at least one supplementary service made available in a mobile radio communication system, with said status information being transmitted from the network side to a mobile terminal,
**characterised in that**
the status information is transmitted independently of a user of the mobile terminal automatically after said mobile terminal has been switched on.

2. Method according to claim 1,
**characterised in that**
the status information is transmitted automatically during the mobile terminal's log-on procedure.

3. Method according to one of the preceding claims,
**characterised in that**
the status information is transmitted after being requested automatically by the mobile terminal.

4. Method according to claim 3,
**characterised in that**
the status information is requested by the mobile terminal within the scope of a request procedure already defined in the mobile radio communication system.

5. Method according to claim 3,
**characterised in that**
the status information is requested by the mobile terminal within the scope of a request procedure specially provided for the purpose.

6. Method according to one of the preceding claims,
**characterised in that**
the transmitting of specific status information can be barred and only the non-barred status information is transmitted.

7. Method according to claim 6,
**characterised in that**
the barring of specific status information takes place on the network side.

8. Method according to one of the preceding claims,
**characterised in that**
the status information is transmitted combined into information elements.

9. Method according to claim 8,
**characterised in that**
each information element has identification information for indicating the information element and/or the format thereof.

10. Method according to claim 8 or 9,
**characterised in that**
each information element contains status information subdivided into teleservice-dependent status information and teleservice-independent status information.

11. Method according to one of claims 8 to 10,
**characterised in that**
each information element contains eight bit octets.

12. Method according to one of claims 8 to 11,
**characterised in that**
independently of the respective supplementary service the status information indicates a multiplicity of different statuses, in particular at least three different statuses, of the respective supplementary service.

13. Method according to claim 6 or 7,
**characterised in that**
in the event that specific status information has been barred, relevant barring information will be transmitted from the network side to the mobile terminal.

14. Method according to claim 13 and one of claims 8 to 12,
**characterised in that**
in the event that transmitting of status information concerning specific supplementary services has been barred, the information transmitted from the network side to the mobile terminal will contain status information for the non-barred supplementary services in combination with barring information for the barred supplementary services.

15. Application of a method according to one of the preceding claims in a GSM mobile radio communication system.
